# FASCICULE DE BREVET EUROPEEN

(11) **EP 4 639 115 B1**
(45) Date de publication et mention de la délivrance du brevet: **11.11.2026**
(21) Numéro de dépôt: 23834101.0
(22) Date de dépôt: 18.12.2023
(51) Int. Cl.: G01J 3/443, G01N 21/71

(54) **DISPOSITIF D'ANALYSE D'UN ECHANTILLON PAR FAISCEAU LASER, COMPRENANT DES MOYENS DE COLLECTE D'INFORMATIONS A ANALYSER**
VORRICHTUNG ZUR ANALYSE EINER PROBE MITTELS EINES LASERSTRAHLS MIT MITTELN ZUR ERFASSUNG VON ZU ANALYSIERENDEN INFORMATIONEN
DEVICE FOR ANALYZING A SAMPLE BY A LASER BEAM, COMPRISING MEANS FOR COLLECTING INFORMATION TO BE ANALYZED

(30) Priorité: 20.12.2022 FR 2213973
(43) Date de publication de la demande: 29.10.2025
(73) Titulaire: Fariaut Instruments, 45100 Orleans (FR)
(72) Inventeur: FARIAUT, François, 45140 Saint Jean de la Ruelle (FR)
(74) Mandataire: Lequien, Philippe
(86) Numéro de dépôt international: PCT/EP2023/086493
(87) Numéro de publication internationale: WO 2024/133166

(56) Documents cités:
- EP-A1- 2 677 301
- WO-A1-99/26186
- FR-A1- 2 964 458
- US-A1- 2013 278 930

## Description

La présente invention concerne le domaine de la cartographie et de l'analyse à haute résolution d'éléments dans des solides.

Plus particulièrement, l'invention concerne, en particulier mais non exclusivement, un dispositif d'analyse à haute résolution pour la cartographie d'éléments dans des solides métalliques.

L'invention peut notamment s'appliquer à l'analyse élémentaire de l'hydrogène et de l'oxygène par spectrométrie d'émission optique sur plasma produit par laser, dans le domaine de l'industrie nucléaire, ou encore de l'industrie aéronautique ou spatiale.

Dans des applications telles que la caractérisation de dispositifs soumis à des sources radioactives, ou encore la caractérisation de l'aptitude au vieillissement de dispositifs employés dans des environnements particulièrement sévères, par exemple dans des aéronefs ou des engins spatiaux, il peut s'avérer indispensable de procéder à l'analyse élémentaire d'échantillons, notamment d'échantillons métalliques.

Plus précisément, il peut s'avérer nécessaire de pouvoir dresser une cartographie de ces éléments au sein de l'échantillon analysé. Par cartographie, il est entendu une identification des éléments composant l'échantillon analysé et, éventuellement, la répartition et le lien entre les différents éléments.

Une telle analyse peut s'avérer particulièrement utile dans des études de fragilisation de métaux par l'hydrogène, ou bien dans des études de vieillissement de gaines de combustibles en présence d'oxygène, ou encore dans des études de fragilisation de gaines de combustibles causée par la formation d'hydrures, ces derniers favorisant la propagation de fissures.

Il existe diverses méthodes connues de cartographie d'éléments présents dans des échantillons.

L'une de ces méthodes est l'analyse élémentaire par « SEOPPL », acronyme de Spectrométrie d'Emission Optique sur Plasma Produit par Laser, technique qui se pratique en atmosphère naturelle.

Cette méthode s'applique notamment au contrôle et à la caractérisation in situ d'échantillons de pièces à analyser.

Un procédé d'analyse élémentaire par spectrométrie d'émission optique sur plasma produit par laser en présence d'argon est décrit par le document de brevet publié sous le numéro EP 0 654 663 B1.

Classiquement, un dispositif d'analyse comprend un bâti sur lequel sont montés :
- un module de génération d'un faisceau laser,
- un module de mise en forme du faisceau intégrant au moins une lentille et un diaphragme de sélection d'une partie du faisceau laser émis par le module de génération,
- des moyens optiques de focalisation du faisceau laser sur un échantillon à étudier, et,
- des moyens de collecte de l'émission optique.

Le faisceau laser généré par le module de génération, après mise en forme par le module de mise en forme, est appliqué sur un échantillon à étudier via les moyens optiques de focalisation.

Se crée alors un plasma au niveau de l'impact du faisceau laser sur l'échantillon à étudier, le plasma engendrant une émission optique à analyser pour cartographier les éléments composant l'échantillon étudié.

La collecte de l'émission optique du plasma est réalisée par les moyens de collecte.

A cet effet, les moyens de collecte comprennent une fibre optique dont une extrémité libre est approchée au plus près du plasma. Plus l'extrémité libre de la fibre est approchée du plasma, et plus le bruit lumineux est éliminé. En d'autres termes, plus la fibre optique est approchée du plasma et moins la lumière environnante est captée par le plasma. L'analyse de la lumière captée par la fibre optique est donc de meilleure qualité que lorsque la fibre optique est éloignée du plasma.

Plus spécifiquement, l'extrémité libre de la fibre optique présente une section terminale transversale à la direction d'extension de la fibre, par laquelle l'émission optique du plasma est collectée.

Pour obtenir une collecte de qualité, la fibre optique doit être positionnée de sorte à ce que sa section forme un angle d'environ 60° avec la direction de projection du faisceau laser.

Une fois collectée, l'émission optique est analysée par des moyens de détermination auxquels la fibre optique est reliée.

Toutefois, l'utilisation d'une fibre optique engendre un inconvénient majeur.

En effet, la fibre optique étant réalisée en silice, elle ne peut pas être pliée. En conséquence, les moyens de collecte présentent un encombrement important dans le dispositif d'analyse.

L'angle formé avec le faisceau laser est par ailleurs important puisqu'il permet la meilleure collecte possible de l'émission optique, grâce au positionnement optimal de la section terminale de la fibre optique, sans risquer d'occulter le faisceau laser, ce qui permet d'obtenir une qualité optimale du plasma engendré par la réaction entre le faisceau laser et l'échantillon à étudier.

Cela augmente alors l'encombrement total des moyens de collecte et donc du dispositif d'analyse.

Plus précisément, cet angle est déterminé de sorte que :
- les moyens de collecte, notamment la fibre optique, ne viennent pas au contact d'objectifs du dispositif, c'est-à-dire des moyens optiques de focalisation du faisceau laser, et
- la fibre optique ne soit pas au contact de la surface à analyser de l'échantillon ou même trop proche du plasma généré au risque de détruire la fibre.

Un exemple de dispositif de collecte avec une fibre optique est également divulgué dans le document EP2677301A1.

L'invention a notamment pour objectif de pallier les inconvénients de l'art antérieur.

Plus précisément, l'invention a pour objectif de proposer des moyens de collecte permettant d'assurer la collecte de l'émission optique d'un plasma tout en présentant un encombrement réduit ou, plus généralement, un positionnement spatial optimisé par rapport à la place disponible autour de l'échantillon à analyser.

L'invention a également pour objectif de fournir de tels moyens de collecte qui offrent une qualité optimale de l'émission optique collectée.

L'invention a en outre pour objectif de fournir de tels moyens de collecte qui soient simples de réalisation et d'installation.

Ces objectifs, ainsi que d'autres qui apparaîtront par la suite, sont atteints grâce à l'invention qui a pour objet un dispositif d'analyse élémentaire d'un échantillon à étudier, comprenant un bâti sur lequel sont montés :
- un socle destiné à supporter un échantillon à étudier ;
- un module de génération d'un faisceau laser destiné à impacter un échantillon à étudier selon une direction perpendiculaire au socle, pour générer un plasma engendrant une émission optique, et
- des moyens de collecte de l'émission optique, comprenant une fibre optique ayant une extrémité libre définissant une portion terminale à placer à proximité du plasma, la portion terminale de la fibre optique des moyens de collecte s'étendant selon un axe principal formant avec le socle un angle A strictement inférieur à 30°, caractérisé et en ce que l'extrémité libre présente une découpe en biseau définissant la section terminale.

Grâce à la découpe en biseau, il est possible de réduire l'angle de la fibre optique par rapport au socle.

Cela bénéficie directement à la compacité du dispositif d'analyse.

Par ailleurs, en réduisant l'angle entre la fibre optique et le socle, la section terminale de la fibre optique peut être approchée au plus près du plasma, ce qui bénéficie à la qualité de l'analyse puisque la distance entre l'émission optique et la section terminale est minimale.

En outre, le biseau offre une bonne captation et une bonne propagation du flux lumineux au travers de la fibre optique.

Selon un aspect avantageux, la section terminale est orientée en direction d'une partie supérieure du plasma.

Cependant, des tests ont démontré que l'orientation de la section terminale en direction de la partie supérieure du plasma offre un qualité d'analyse supérieure aux solutions classiques.

Selon un autre aspect avantageux, la fibre optique présente un diamètre de 1000 µm.

Ce diamètre de fibre optique assure une collecte de l'amission optique suffisante pour permettre la cartographie élémentaire de la composition de l'échantillon étudié et permet de réaliser la découpe en biseau de manière aisée.

L'invention concerne également un procédé d'analyse élémentaire d'un échantillon, caractérisé en ce que le procédé met en œuvre un dispositif d'analyse tel que précédemment décrit.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés décrits ci-après.
[Fig.1] La [Fig.1] est une représentation schématique d'un système d'analyse comprenant un dispositif d'analyse selon l'invention.
[Fig.2] La [Fig.2] est une représentation schématique de détail du dispositif d'analyse selon l'invention, illustrant des moyens de collecte d'une émission optique de plasma.
[Fig.3] La [Fig.3] est une représentation schématique de détail d'une extrémité libre d'une fibre optique des moyens de collecte du dispositif d'analyse selon l'invention.
[Fig.4] La [Fig.4] est une représentation schématique de détail d'un dispositif d'analyse, illustrant des moyens de collecte d'une émission optique de plasma, selon l'art antérieur.
[Fig.5] La [Fig.5] est une représentation schématique de détail d'une extrémité libre d'une fibre optique des moyens de collecte du dispositif d'analyse selon une variante de réalisation de l'invention.

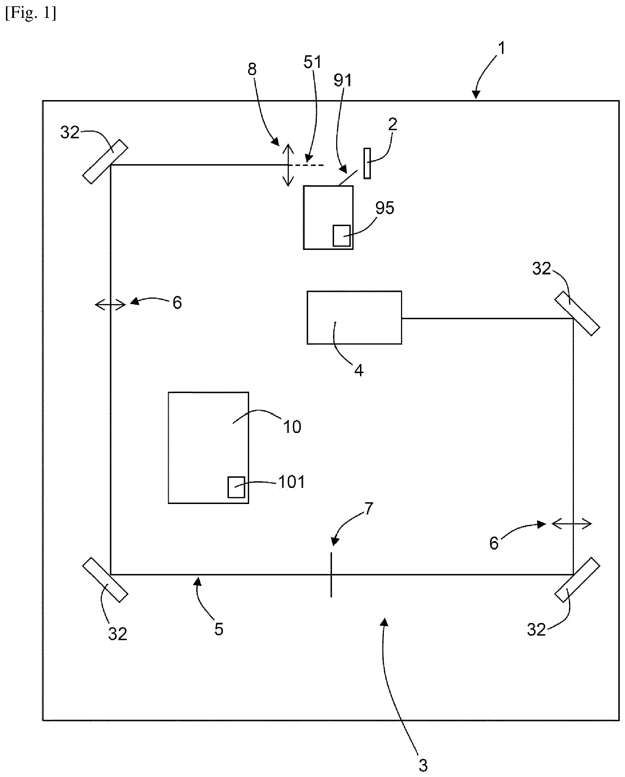

La [Fig.1] illustre un système 1 d'analyse élémentaire d'un échantillon 2 à étudier.

Le système 1 inclut un dispositif d'analyse 3 tel que décrit ci-après, ce dispositif d'analyse 3 comprenant un socle 31 de réception de l'échantillon 2.

Le dispositif d'analyse 3 comprend également un bâti sur lequel sont montés :
- un module de génération 4 d'un faisceau laser 5,
- un module de mise en forme du faisceau laser 5 intégrant au moins une lentille 6 et un diaphragme de sélection 701, 702, 703 d'une partie du faisceau laser 5 émis par le module de génération 4,
- des moyens optiques de focalisation 8 du faisceau laser 5 sur l'échantillon 2 à étudier.

Tel que cela est illustré par la [Fig.1], le dispositif d'analyse 3 comprend, selon le sens d'émission du faisceau laser 5 depuis le module de génération 4 vers l'échantillon 2, une pluralité de lentilles 6 et un diaphragme 7

Le dispositif d'analyse 3 comprend également une pluralité de miroirs 32 permettant de dévier le faisceau laser 5 depuis le module de génération 4 jusqu'aux moyens de focalisation 8, cela afin de limiter l'encombrement du dispositif d'analyse 3.

En sortie des moyens optiques de focalisation 8, le faisceau laser 5 devient un faisceau de focalisation 51. Dans ce cas, le faisceau de focalisation 51 présente une forme conique allant en s'amincissant en direction de l'échantillon 2, tandis qu'entre le module de génération 4 et les moyens de focalisation 8, le faisceau laser 5 présente une forme sensiblement cylindrique.

En outre, le système 1 comprend des moyens de collecte 9 et des moyens de détermination 10 dont le rôle sera décrit ci-après.

Comme décrit précédemment, le système 1 permet d'analyser un échantillon 2 pour en cartographier sa composition élémentaire.

A cet effet, le faisceau laser 5 est émis par le module de génération 4 pour être dirigé vers l'échantillon 2 pour en impacter sa surface.

Lorsque le faisceau laser 5 impacte l'échantillon 2 à étudier, un plasma P se crée, engendrant une émission optique à analyser pour cartographier les éléments composant l'échantillon 2.

La collecte de l'émission optique du plasma est réalisée par les moyens de collecte 9.

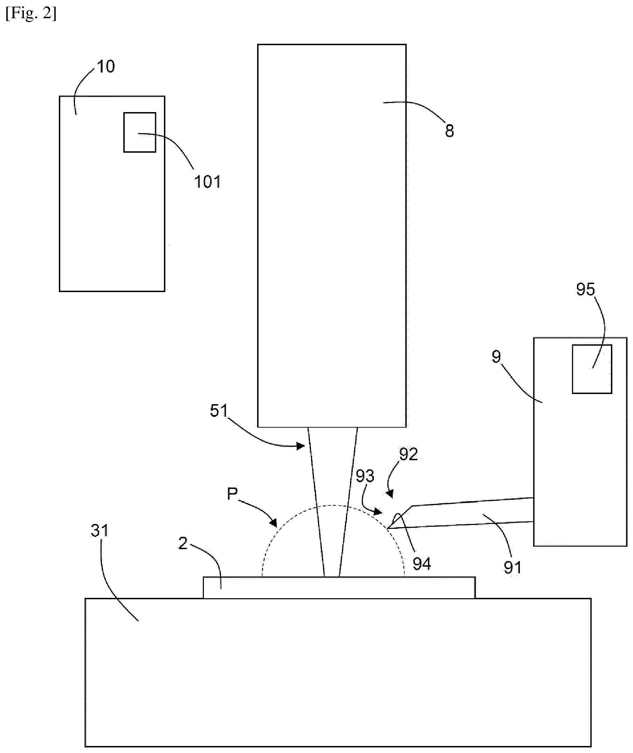

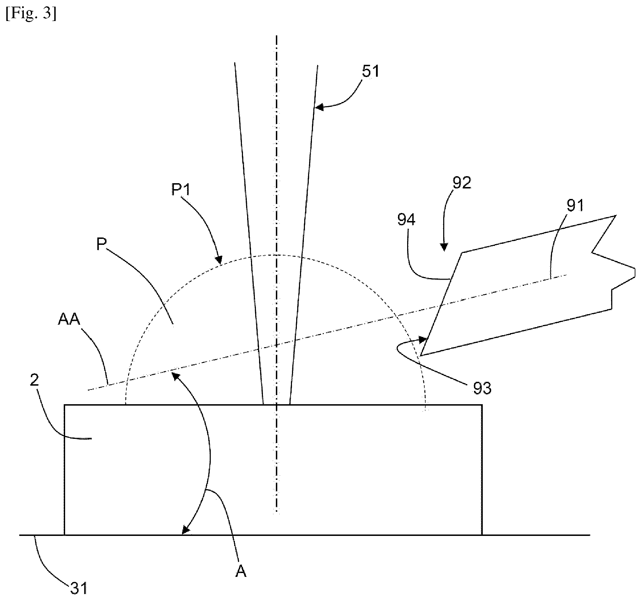

Pour cela, tel que cela est illustré par les figures 2 et 3, les moyens de collecte 9 comprennent une fibre optique 91 dont une extrémité libre définissant une portion terminale 92 est approchée au plus près du plasma P. La fibre optique 91 présente préférentiellement un diamètre de 1000 µm.

La portion terminale 92 s'étend selon un axe principal AA formant avec le socle 31 un angle A strictement inférieur à 30°.

La portion terminale 92 présente une section terminale 93 qui est positionnée au plus proche du plasma P.

Selon le mode de réalisation illustré par les figures 2 et 3, la portion terminale 92 présente une découpe en biseau 94 définissant la section terminale 93.

La section terminale 93 est orientée vers le haut, en direction opposée au plasma P.

Autrement dit la section terminale 93 est orientée en direction d'une partie supérieure P1 du plasma P. La partie supérieure P1 est distante de la zone d'impact entre le faisceau laser 5 et l'échantillon 2, en direction des moyens optiques de focalisation 8.

Les moyens de collecte 9 comprennent également des premiers moyens de communication 95 destinés à établir, avec des deuxièmes moyens de communications 101 des moyens de détermination 10, une voie de communication.

Les premiers moyens de communication 95 et les deuxièmes moyens de communication 101 peuvent être du type sans fils. En variante, les premiers moyens de communication 95 et les deuxièmes moyens de communication 101 peuvent se présenter sous la forme de connecteurs destinés à recevoir la fiche d'un câble de liaison filaire.

Cela permet de protéger la fibre optique 91 pour s'assurer que la collecte de l'émission optique soit réalisée de manière optimale.

En outre, l'aiguille permet de maintenir la position de la section terminale 93 en regard et au plus près du plasma P.

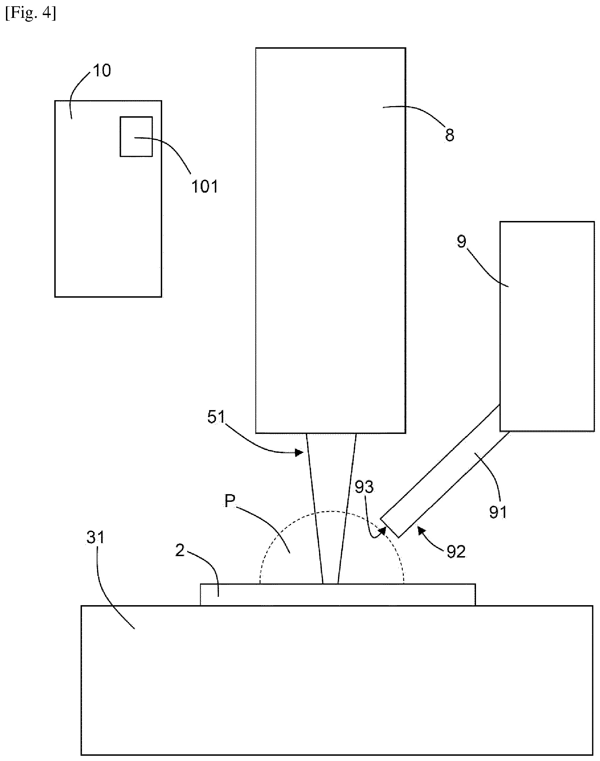

En référence à la [Fig.4] qui représente schématiquement un dispositif d'analyse 3 selon l'art antérieur, on peut constater la réduction d'encombrement obtenue par l'utilisation de moyens de collecte 9 selon l'invention, ainsi que le gain de qualité de collecte.

En effet, en réduisant l'angle A, il est possible de libérer un espace important au-dessus des moyens de collecte 9. Cela peut ainsi permettre de loger d'autres équipements du dispositif d'analyse 3, et/ou réduite la taille d'un carter de protection du dispositif d'analyse 3.

En outre, comme on peut le constater entre les figures 2 et 3 d'une part, et la [Fig.4] d'autre part, grâce à la découpe en biseau 94, la section terminale 93 peut être approchée au plus près du plasma P.

De plus, la découpe en biseau 94 permet d'obtenir une section terminale 93 présentant une plus grande surface comparativement à la section terminale 93 de l'art antérieur. Il en résulte alors que la fibre optique 91 des moyens de collecte 9 du dispositif d'analyse 3 selon l'invention peut capter une plus grande intensité lumineuse du plasma P, au bénéfice de la qualité de l'analyse réalisée par les moyens de détermination 10.

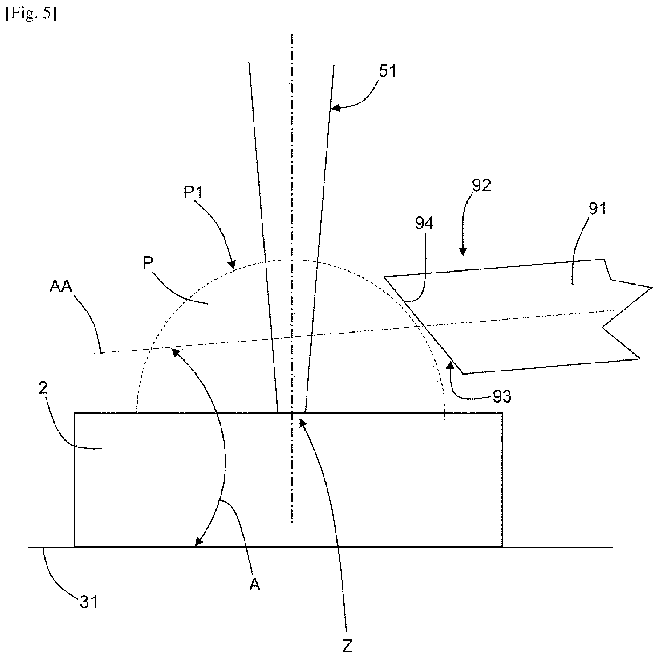

Selon une variante de réalisation illustrée par la [Fig.5], la section terminale 93 est orientée en direction du au plasma P. Plus spécifiquement, la section terminale 93 est orientée vers une zone d'impact du faisceau laser 5 sur l'échantillon 2.

Plus précisément, la section terminale 93 est tournée vers l'échantillon 2 et le support 31.

Cette orientation particulière permet de conserver une captation importante de l'intensité lumineuse émise par le plasma P.

## Revendications

1. Dispositif d'analyse (3) élémentaire d'un échantillon (2) à étudier, comprenant un bâti sur lequel sont montés :
- un socle (31) destiné à supporter un échantillon (2) à étudier ;
- un module de génération (4) d'un faisceau laser destiné à impacter un échantillon (2) à étudier selon une direction perpendiculaire au socle (31), pour générer un plasma (P) engendrant une émission optique, et
- des moyens de collecte (9) de l'émission optique, comprenant une fibre optique (91) ayant une extrémité libre définissant une portion terminale (92) ayant une section terminale (93) à placer à proximité du plasma (P),
la portion terminale (92) de la fibre optique (91) des moyens de collecte (9) s'étendant selon un axe principal (AA) formant avec le socle (31) un angle (A) strictement inférieur à 30°, **caractérisé en ce que** l'extrémité libre présente une découpe en biseau (94) définissant la section terminale (93).

2. Dispositif selon la revendication précédente **caractérisé en ce que** la section terminale (93) est orientée vers le haut.

3. Dispositif d'analyse (3) selon l'une quelconque des revendications précédentes, **caractérisé en ce que** la fibre optique (91) présente un diamètre de 1000 µm.

4. Procédé d'analyse élémentaire d'un échantillon (2), **caractérisé en ce que** le procédé met en œuvre un dispositif d'analyse (3) selon l'une quelconque des revendications précédentes.

## Patentansprüche

1. Vorrichtung zur elementaren Analyse (3) einer zu untersuchenden Probe (2), einschließlich eines Gestells, auf dem montiert sind:
- ein Sockel (31), der dazu bestimmt ist, eine zu untersuchende Probe (2) aufzunehmen;
- ein Modul zur Erzeugung (4) eines Laserstrahls, der dazu bestimmt ist, auf eine zu untersuchende Probe (2) in einer Richtung senkrecht zu dem Sockel (31) aufzutreffen, um ein Plasma (P) zu erzeugen, das eine optische Emission erzeugt, und
- Mittel zum Sammeln (9) der optischen Emission, umfassend eine optische Faser (91) mit einem freien Ende, das einen Endabschnitt (92) mit einem Endbereich (93) definiert, der in der Nähe des Plasmas (P) zu platzieren ist, wobei der Endabschnitt (92) der optischen Faser (91) der Sammelmittel (9) sich entlang einer Hauptachse (AA) erstreckt, die mit dem Sockel (31) einen Winkel (A) von strikt weniger als 30° bildet, **dadurch gekennzeichnet, dass** das freie Ende einen abgeschrägten Ausschnitt (94) aufweist der den Endbereich (93) definiert.

2. Vorrichtung nach dem vorhergehenden Anspruch, **dadurch gekennzeichnet, dass** der Endbereich (93) nach oben gerichtet ist.

3. Analysevorrichtung (3) nach einem der vorhergehenden Ansprüche, **dadurch gekennzeichnet, dass** die optische Faser (91) einen Durchmesser von 1000 µm aufweist.

4. Verfahren zur elementaren Analyse einer Probe (2), **dadurch gekennzeichnet, dass** das Verfahren eine Analysevorrichtung (3) nach einem der vorhergehenden Ansprüche einsetzt.

## Claims

1. An elementary analysis device (3) for analysing a sample (2) to be studied, comprising a frame on which are mounted:
- a stand (31) for supporting a sample (2) to be studied;
- a module (4) for generating a laser beam intended to impact a sample (2) to be studied along a direction perpendicular to the stand (31), to generate a plasma (P) yielding an optical emission, and
- means for collecting (9) the optical emission, comprising an optical fibre (91) having a free end defining a terminal portion (92) having a terminal section (93) to be placed in proximity to the plasma (P), the terminal portion (92) of the optical fibre (91) of the collection means (9) extending along a main axis (AA) forming with the stand (31) an angle (A) strictly less than 30°, **characterised in that** the free end has a bevel cut (94) defining the terminal section (93).

2. The device according to the preceding claim, **characterised in that** the terminal section (93) is oriented upwards.

3. The analysis device (3) according to any one of the preceding claims, **characterised in that** the optical fibre (91) has a diameter of 1,000 µm.

4. A method for the elementary analysis of a sample (2), **characterised in that** the method implements an analysis device (3) according to any one of the preceding claims.
